# FASCICULE DE BREVET EUROPEEN

(11) **EP 2 994 711 B1**
(45) Date de publication et mention de la délivrance du brevet: **13.10.2021**
(21) Numéro de dépôt: 14727933.5
(22) Date de dépôt: 09.05.2014
(51) Int. Cl.: F28F 21/08, F28D 21/00, B23K 103/04, B23K 103/10, B23K 103/12, F28F 7/02, B23K 20/02, F28F 3/12, F28D 9/00, F28F 3/04

(54) **PROCEDE DE REALISATION D'UN MODULE D'ECHANGEUR DE CHALEUR A AU MOINS DEUX CIRCUITS DE CIRCULATION DE FLUIDE**
VERFAHREN ZUR HERSTELLUNG EINES WÄRMETAUSCHERMODULS MIT MINDESTENS ZWEI STRÖMUNGSKREISLÄUFEN
METHOD FOR PRODUCING A HEAT EXCHANGER MODULE HAVING AT LEAST TWO FLUID FLOW CIRCUITS

(30) Priorité: 10.05.2013 FR 1354224
(43) Date de publication de la demande: 16.03.2016
(73) Titulaire: Commissariat à l'Energie Atomique et aux Energies Alternatives, 75015 Paris (FR)
(72) Inventeur: RIGAL, Emmanuel, F-38360 Sassenage (FR); CACHON, Lionel, F-04100 Manosque (FR); LEIBOLD, Jean-Marc, F-38800 Pont De Claix (FR); MORO-LE GALL, Isabelle, F-38600 Fontaine (FR); VIDOTTO, Fabien, 38500 LA BUISSE (FR)
(74) Mandataire: Nony
(86) Numéro de dépôt international: PCT/IB2014/061319
(87) Numéro de publication internationale: WO 2014/181297

(56) Documents cités:
- EP-A2- 1 125 630
- WO-A1-2011/036207
- FR-A1- 2 879 489
- US-A- 4 408 833
- US-A- 5 249 359
- None

## Description

### Domaine technique

La présente invention concerne les échangeurs de chaleur à au moins deux circuits de fluide comportant chacun des canaux.

L'invention a trait plus particulièrement à un nouveau procédé de fabrication de tels échangeurs par soudage par diffusion obtenu par la technique de compression isostatique à chaud (CIC).

Les échangeurs de chaleur connus comprennent soit un soit au moins deux circuits à canaux de circulation interne de fluide. Dans les échangeurs à un seul circuit, les échanges thermiques se réalisent entre le circuit et un fluide environnant dans lequel il baigne. Dans les échangeurs à au moins deux circuits de fluide, les échanges thermiques se réalisent entre les deux circuits de fluide.

Il est connu des réacteurs chimiques qui mettent en œuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation d'échangeurs de chaleur à fonction uniquement d'échanges thermiques que la réalisation d'échangeurs-réacteurs. Aussi, par « échangeur de chaleur à au moins deux circuits de fluide », il faut comprendre dans le cadre de l'invention, aussi bien un échangeur de chaleur à fonction uniquement d'échanges thermiques qu'un échangeur-réacteur.

### Etat de la technique

Les échangeurs de chaleur, dits à plaques, existants présentent des avantages importants par rapports aux échangeurs de chaleur, dits à tubes, existants, en particulier leurs performances thermiques et leur compacité grâce à un rapport de la surface sur le volume d'échanges thermiques favorablement élevé.

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte dénommée calandre. Dans ces échangeurs à tubes et calandre, l'un des fluides circule à l'intérieur des tubes tandis que l'autre fluide circule à l'intérieur de la calandre. Ces échangeurs à tubes et calandre présentent un volume important et sont donc de faible compacité.

Les échangeurs à plaques connus sont plus compacts et sont obtenus par empilement de plaques comportant des canaux et assemblées entre elles.

Les canaux sont réalisés par emboutissage de plaques, le cas échéant par ajout de feuillards pliés sous forme d'ailettes ou par usinage de rainures. L'usinage est réalisé par des moyens mécaniques, par exemple par fraisage ou par voie chimique. L'usinage chimique est usuellement appelé gravage chimique ou électrochimique.

L'assemblage des plaques entre elles a pour objectif d'assurer l'étanchéité et/ou la tenue mécanique des échangeurs, notamment la tenue à la pression des fluides circulant à l'intérieur.

Plusieurs techniques d'assemblage sont connues et sont mises en œuvre en fonction du type d'échangeur à plaques souhaité. L'assemblage peut ainsi être obtenu par des moyens mécaniques, tels que des tirants maintenant l'empilement serré entre deux plaques épaisses et rigides disposées aux extrémités. L'étanchéité des canaux est alors obtenue par écrasement de joints rapportés. L'assemblage peut être également obtenu par soudage, généralement limité à la périphérie des plaques, ce qui nécessite parfois d'insérer, ultérieurement au soudage, l'échangeur dans une calandre pour permettre sa tenue à la pression des fluides. L'assemblage peut encore être obtenu par brasage, en particulier pour des échangeurs pour lesquels des ailettes sont ajoutées. L'assemblage peut enfin être obtenu par soudage par diffusion (soudage-diffusion).

Les deux dernières techniques citées permettent de réaliser des échangeurs particulièrement performants en termes de tenue mécanique. En effet, grâce à ces deux techniques, l'assemblage est obtenu non seulement à la périphérie des plaques mais aussi à l'intérieur de l'échangeur.

Les échangeurs de chaleur à plaques assemblés par soudage par diffusion présentent des joints encore plus performants mécaniquement que les joints des échangeurs obtenus par brasage du fait de l'absence du métal d'apport requis pour le brasage.

Le soudage-diffusion consiste à obtenir un assemblage à l'état solide en appliquant une force à chaud sur les pièces à assembler pendant un temps donné. La force appliquée a une fonction double: elle permet l'accostage, c'est-à-dire la mise en contact des surfaces à souder, et elle facilite l'élimination par fluage-diffusion de la porosité résiduelle dans les joints (interfaces).

La force peut être appliquée par compression uniaxiale, par exemple à l'aide d'une presse équipée d'un four ou simplement à l'aide de masses disposées au sommet de l'empilement des pièces à assembler. Ce procédé est communément appelé soudage-diffusion uniaxial et il est appliqué industriellement pour la fabrication d'échangeurs de chaleur à plaques.

Une limitation importante du procédé soudage-diffusion uniaxial tient au fait qu'il ne permet pas de souder des joints d'orientation quelconque par rapport à la direction d'application de la force de compression uniaxiale.

Un autre procédé alternatif pallie cet inconvénient. Dans cet autre procédé, la force est appliquée via un gaz sous pression dans une enceinte étanche. Ce procédé est communément appelé Compression Isostatique à Chaud (CIC). Un autre avantage du procédé de soudage-diffusion par CIC comparativement au procédé de soudage-diffusion uniaxial est qu'il est plus largement répandu à l'échelle industrielle. En effet, la CIC est aussi utilisée pour le traitement par lots de pièces de fonderie ainsi que pour la compaction de poudres.

Les échangeurs compacts à plaques obtenus par soudage par diffusion actuellement connus présentent aussi des inconvénients majeurs que l'on peut énumérer comme suit.

Un premier inconvénient majeur est le coût de fabrication des plaques, en particulier dans le cas de plaques à canaux usinés. Le gravage chimique permet certes une certaine réduction de coût par rapport à l'usinage mécanique mais qui est toute relative : en effet, rapporté à une longueur donnée, le coût d'un canal d'un échangeur à plaques réalisé par gravage chimique est supérieur à celui d'un échangeur à tubes. En outre, le gravage chimique présente de nombreux inconvénients, tels qu'une précision dimensionnelle insuffisante, un arrondissement des arêtes défavorable au soudage par diffusion ou une pollution résiduelle des surfaces à assembler par des résidus des produits de décapage et de masquage utilisés.

Un second inconvénient majeur des échangeurs compacts à plaques soudées par diffusion est la difficulté à trouver un bon compromis entre la résistance mécanique des joints d'interface obtenus, la déformation acceptable des canaux et le grossissement de grain du matériau de structure.

En effet, dans le procédé de soudage-diffusion uniaxial, on peut appliquer une force de faible voire très faible valeur qui déforme peu les canaux, à la condition que les plaques soient bien en contact mutuel et que la faible valeur de la force soit compensée par une augmentation de la température de soudage pour l'élimination de la porosité aux interfaces. Ces conditions impliquent inévitablement un grossissement du grain du matériau qui peut devenir rédhibitoire vis-à-vis de sa résistance à la corrosion et de ses propriétés mécaniques. En outre, dans de nombreuses applications, il est critique que le nombre de grains de matériau situés entre deux circuits de fluide dépasse une valeur minimale pour éviter les risques de fuite.

Dans le procédé de soudage-diffusion par CIC, l'empilement des pièces est préalablement encapsulé dans un conteneur étanche pour éviter que le gaz ne pénètre dans les interfaces constituées par les surfaces à souder. La pression de gaz habituellement utilisée est élevée, de l'ordre de 500 à 2000 bar, typiquement 1000 bar. La pression minimale de fonctionnement des enceintes industrielles adaptées pour mettre en œuvre la CIC est quant à elle comprise entre 40 et 100 bar. Or, les joints soudés à cette pression sont moins résistants que ceux obtenus à plus haute pression, par exemple à 1000 bar, toutes les autres conditions étant égales par ailleurs (matériau, température, état de surface...). De surcroît, cette pression entre 40 et 100 bar est encore trop importante pour des plaques à grande densité de canaux, c'est-à-dire des plaques dont la surface de contact déterminée avec une plaque adjacente est faible par rapport à la surface totale apparente. En effet, pour ce type de plaques, même une pression de quelques dizaines de bar peut suffire à engendrer une déformation inacceptable des canaux. Une solution possible peut consister à diminuer la température d'assemblage pour que le matériau résiste mieux à la pression, mais cela revient à dégrader encore la résistance des joints. Une autre solution possible peut consister à changer le dessin des canaux pour rendre l'empilement plus résistant à la pression, mais cela revient à rendre l'échangeur à plaques moins compact.

Il est à noter que la transmission de l'effort de soudage dans un empilement de plaques rainurées se fait de façon inégale, qu'il s'agisse du procédé de soudage diffusion uniaxial ou du procédé de soudage diffusion par CIC. En effet, les parties des interfaces situées sous les rainures sont soumises à un effort de soudage réduit puisque celui-ci n'est transmis que par les deux nervures, ou isthmes, situées de part et d'autre de chaque rainure. A l'inverse, un effort de soudage élevé est obtenu en regard des nervures. La qualité des interfaces peut donc varier d'un endroit à l'autre de l'empilement.

En outre, pour des applications particulièrement exigeantes, il est nécessaire de pouvoir contrôler en tout point de l'empilement la qualité des interfaces, par exemple par contrôle non destructif. Or, cela n'est pas possible avec les techniques disponibles aujourd'hui, sauf dans certains cas très précis, par exemple dans le cas de canaux peu incurvés et de dimensions suffisantes pour laisser passer des sondes de contrôle ultrasonore.

Il est déjà connu plusieurs solutions pour réaliser des échangeurs de chaleur par soudage-diffusion par CIC tout en maîtrisant la géométrie des canaux et la qualité des interfaces. Le point commun à ces solutions est de réaliser un empilement tel qu'il est possible de laisser les canaux ouverts pendant le cycle de CIC. Ainsi, le gaz de pressurisation occupe tout l'espace intérieur des canaux et par là ceux-ci ne se déforment pas ou très peu. Il devient alors possible de réaliser la CIC à haute pression.

Une première solution connue consiste à utiliser pour chaque canal un tube, et de souder au moins une extrémité de ce dernier de manière étanche au conteneur lui-même étanche. Chaque tube est au préalable inséré dans une rainure d'une plaque puis les tubes insérés dans les rainures d'une même plaque sont mis en sandwich avec une autre plaque rainurée ou non qui est adjacente. Un des inventeurs de la présente demande a déjà mis en œuvre cette solution [1]. L'étape préalable impérative de soudage étanche d'au moins une extrémité de chaque tube au conteneur étanche implique intrinsèquement un nombre et une densité de tubes limitée. Un inconvénient majeur de cette solution est qu'elle implique que les canaux de l'échangeur soient réalisables sous forme de tubes, ce qui exclut des formes complexes, telles que par exemple des formes avec des changements de direction rapides qui sont irréalisables par cintrage. Ainsi, au lieu de formes complexes, les canaux sont réalisés sous des formes plus simples et moins compactes. En d'autres termes, cette première solution connue dégrade la compacité d'un échangeur de chaleur comparativement à un échangeur de chaleur à plaques rainurées soudées par diffusion selon l'état de l'art, tel que décrit en préambule.

Une seconde solution connue est décrite dans la demande de brevet WO 2006/067349. Elle consiste essentiellement à éviter que les interfaces à souder ne débouchent dans les canaux. Ainsi, la solution selon cette demande de brevet consiste à réaliser dans des plaques métalliques des rainures à section ouverte à leurs sommets puis d'obturer ceux-ci individuellement par soudage d'une lame mince métallique, en laissant ainsi une ou les deux extrémité(s) des rainures accessibles au gaz de pressurisation. Le problème du soudage des extrémités des canaux est simplifié par rapport à la première solution connue, mais au prix de la nécessité de souder une lame par canal. Cela peut s'avérer laborieux, onéreux et difficile à mettre en œuvre dans le cas d'un grand nombre de canaux par échangeur.

Une troisième solution connue est décrite dans la demande de brevet WO 2011/026925. Les étapes suivantes sont réalisées :
- dépôt sur une plaque rainurée d'un cordon continu de matière en relief à la périphérie de chaque rainure et d'un autre cordon continu également en relief à la périphérie de la plaque,
- empilement des plaques rainurées avec leurs cordons continus dans un conteneur sans que les rainures n'aient d'extrémité débouchante;
- étanchéification du conteneur ;
- application d'un cycle de CIC à basse pression durant lequel l'étanchéité de chaque canal délimité individuellement par au moins une rainure est obtenue grâce au soudage diffusion des cordons continus ;
- perçage des canaux de sorte à faire laisser le gaz de pressurisation pénétrer dans chaque canal ;
- application d'un cycle de CIC à haute pression pour conférer aux joints de bonnes propriétés mécaniques par soudage-diffusion des surfaces délimitées par les cordons continus.

Comme pour la solution connue selon la demande de brevet WO2006/067349, cette dernière solution connue peut s'avérer laborieuse, onéreuse et difficile à mettre en œuvre dans le cas d'un grand nombre de canaux par échangeur.

Une quatrième solution a été envisagée par la demanderesse. Cette solution est décrite et revendiquée dans la demande de brevet WO2013/150458. Elle consiste essentiellement à réaliser deux groupes de tubes métalliques de forme allongée dont une première extrémité est borgne et une deuxième opposée à la première qui est ouverte, à aligner les tubes de chaque groupe en les positionnant côte-à-côte, à empiler les groupes en alternance avec positionnement tête bêche et décalage pour créer des jeux, à combler chaque jeu par des lames ou plaquettes métalliques, puis encapsuler l'empilement ainsi formé par une enveloppe formée de plaques métalliques. On simplifie de cette façon le soudage étanche des périphéries des interfaces tout en laissant ouverte la deuxième extrémité de chaque tube, rendant ainsi possible l'application d'un cycle de CIC haute pression. Cette solution, comme d'ailleurs la première solution évoquée ci-avant, ne convient pas pour la fabrication d'échangeurs à canaux de géométrie complexe et/ou de petites dimensions tels que ceux réalisés à partir de tôles ou plaques rainurées, du fait de la forme intrinsèque possible des tubes. Les documents US 5 249 359 A, EP 1 125 630 A2, US 4 408 833 A1 et WO 2011/036207 A1 montrent également de tels procédés de réalisation de modules d'échangeur de chaleur par soudage-diffusion.

Il existe donc un besoin d'améliorer encore les procédés de réalisation d'échangeurs de chaleur par soudage-diffusion, notamment pour obtenir des échangeurs compacts, avec des canaux de géométrie complexe et/ou de petites dimensions, pour améliorer la tenue mécanique de leurs joints sans engendrer de trop forte déformation des canaux, ni de grossissement de grain du matériau de structure inacceptable, pour pouvoir contrôler en tout point des échangeurs la qualité des joints, par exemple par contrôle non destructif, et pour avoir des coûts de fabrication et une facilité de mise en œuvre acceptables.

Le but de l'invention est de répondre au moins partiellement à ce besoin.

### Exposé de l'invention

Pour ce faire, l'invention a pour objet un procédé de réalisation d'un module d'échangeur de chaleur à au moins deux circuits de fluide comportant chacun des canaux, comportant les étapes suivantes :
a/ réalisation d'un ou plusieurs éléments d'un des deux circuits de fluide, dit premier circuit, chaque élément du premier circuit comportant au moins deux plaques métalliques dont au moins une comporte des premières rainures ;
b/ empilement des plaques métalliques de chaque élément de sorte que les premières rainures forment les canaux du premier circuit;
c/ assemblage par soudage-diffusion des plaques métalliques empilées de chaque élément du premier circuit;
d/ réalisation d'un ou plusieurs éléments d'au moins un autre circuit de fluide, dit deuxième circuit, chaque élément du deuxième circuit comportant au moins une partie des canaux du deuxième circuit; l'étape d/ étant réalisée, pour chaque élément du deuxième circuit, soit par une étape d1/ d'empilement d'au moins deux plaques métalliques dont au moins une comporte des deuxièmes rainures formant une partie des canaux du deuxième circuit, puis une étape d2/ d'assemblage par soudage-diffusion entre les au moins deux plaques métalliques empilées de chaque élément du deuxième circuit, soit par une étape d'1/ d'insertion de tubes agencés parallèlement entre eux formant une partie des canaux du deuxième circuit;
e/ assemblage soit par soudage-diffusion, soit par brasage, soit par brasage-diffusion entre le ou les éléments du premier circuit et le ou les éléments du deuxième circuit empilés.

Par « brasage-diffusion », on entend la définition usuelle d'un homme de l'art, telle qu'explicitée dans la publication [2].

Ainsi, l'invention est essentiellement un procédé de réalisation d'un échangeur de chaleur à au moins deux fluides, avec un assemblage intermédiaire par soudage diffusion, de préférence en CIC, des éléments du premier circuit de fluide réalisés à partir de plaques rainurées.

Le soudage-diffusion intermédiaire pour les éléments du premier circuit de fluide permet d'avoir un effort de soudage uniquement dédié à ceux-ci, sans la nécessité de souder simultanément les éléments du deuxième circuit de fluide. Autrement dit, l'effort de soudage est appliqué individuellement à chaque élément du premier circuit qui, contrairement aux procédés selon l'état de l'art n'est pas réduit, c'est-à-dire écranté, par la présence des éléments du deuxième circuit de fluide.

Grâce à l'invention, du fait que l'effort de soudage dans l'étape c/ d'assemblage est appliqué indépendamment sur chacun des éléments du premier circuit de fluide, on peut envisager des épaisseurs initiales de plaques desdits éléments relativement importantes afin de réduire au maximum la déformation des canaux formés par leurs rainures. Puis avant l'étape e/ d'assemblage avec le ou les éléments du deuxième circuit de fluide, on peut réduire au juste nécessaire, par exemple par usinage, les épaisseurs de ces plaques de chaque élément du premier circuit pour avoir l'épaisseur de paroi désirée entre éléments du premier circuit et ceux du deuxième circuit.

Ainsi, avec des épaisseurs de plaques initialement plus importantes pour chaque élément du premier circuit, on peut augmenter l'effort de soudage et/ou la température de soudage donc la qualité des joints et trouver le meilleur compromis entre performances des joints, grossissement de grain et déformation des canaux du premier circuit de fluide.

En outre, on peut définir des canaux de géométrie complexe et/ou de petites dimensions pour chaque élément du premier circuit de fluide.

Le procédé selon l'invention permet d'obtenir des échangeurs de chaleur à au moins deux circuits de fluide, qui sont compacts et dont l'assemblage indépendant par soudage diffusion, de préférence en CIC, à relativement basse pression de chaque élément du premier circuit de fluide au préalable de l'assemblage avec le ou les éléments du deuxième circuit de fluide permet de ne pas générer d'écrasement des canaux ni d'altération excessive du matériau de structure par grossissement du grain inacceptable.

En outre, le coût et la facilité de mise en œuvre du procédé selon l'invention sont acceptables.

Le matériau métallique constitutif de chaque élément du premier et du deuxième circuit de fluides, ainsi que des collecteurs de fluide rapportés par soudage, est choisi en fonction des conditions de l'utilisation requise pour le module échangeur, à savoir la pression des fluides, les températures et nature des fluides circulant à travers le module. Il peut s'agir par exemple d'aluminium, de cuivre, de nickel, de titane ou d'alliages de ces éléments ainsi que d'un acier, notamment un acier allié ou un acier inoxydable ou encore d'un métal réfractaire choisi parmi les alliages de niobium, de molybdène, de tantale ou de tungstène.

Les canaux de circulation des fluides ont une largeur et une hauteur qui dépendent notamment de la nature et des caractéristiques des fluides véhiculés et de l'échange de chaleur désiré. Les largeurs et hauteurs peuvent notamment varier le long du cheminement des canaux. De façon générale, les modules d'échangeurs compacts selon l'invention comportent des canaux dont les dimensions varient de 0,1mm à 10mm, de préférence de 1 à 5mm. Pour ce faire, les épaisseurs d'une plaque métallique d'un élément du premier circuit mises en œuvres dans les étapes a/ à c/ selon l'invention peut varier de 0,1 à 15mm, de préférence de 1 à 10mm. Enfin, le cheminement des canaux dans leur longueur peut être droit ou non, et peut former des coudes ou des motifs par exemple en zig-zag.

La fabrication des plaques métalliques constitutives de chaque élément du premier circuit peut mettre en œuvre des procédés qui dépendent de la géométrie que l'on souhaite donner aux canaux du premier circuit. Par exemple, si on désire des canaux de section rectangulaire constante avec des angles arrondis, il est préférable d'usiner des rainures sur deux plaques constituant un seul élément. Les canaux sont alors formés par l'empilement des deux plaques l'une sur l'autre avec positionnement en vis-à-vis des rainures de chaque plaque. Si au contraire on désire des canaux à angles vifs, il est préférable de mettre en sandwich entre deux plaques non rainurées, une plaque intermédiaire présentant des motifs évidés par une technique de découpe laser ou par gravure chimique traversante.

Afin de former les canaux, on réalise l'empilement selon l'étape b/ des plaques constitutives de chaque élément du premier circuit en formant les canaux. A cette fin, on peut utiliser des pions de centrage ou caler les plaques sur leurs chants et les solidariser par exemple par soudage.

De préférence, préalablement à l'empilement, c'est-à-dire avant l'étape b/, on réalise une étape a1/ de nettoyage des plaques de chaque élément du premier circuit. Le nettoyage peut être réalisé par exemple à l'aide de détergents ou de solvants.

Selon un mode de réalisation avantageux, après l'étape b/, on réalise une étape d'étanchéification b1/ de la périphérie des au moins deux plaques métalliques de chaque élément, puis on réalise une étape b2/ de dégazage de l'intérieur de chaque empilement étanche à travers un orifice débouchant à chaque interface entre plaques, une étape b3/ de fermeture de l'orifice débouchant, et enfin on réalise l'étape c/ par application d'un cycle de compression isostatique à chaud (CIC) à relativement basse pression à chaque empilement étanche et dégazé. Le dégazage des canaux et de la ou les interfaces est réalisé par mise sous vide, au travers de l'orifice débouchant puis celui-ci est obturé.

Selon ce mode, on réalise selon une variante avantageuse non couverte par l'invention l'étape b1/ par soudage de la périphérie de chaque empilement.

Toujours selon ce mode, on réalise de manière alternative non couverte par l'invention l'étape b1/ par insertion de chaque empilement dans une enveloppe métallique, dite conteneur, puis une étape de soudage du conteneur, l'orifice débouchant étant également débouchant sur un tube, dit queusot, soudé sur une face du conteneur, l'étape b2/ étant réalisée à travers le queusot et l'étape b3/ étant réalisée par soudage du queusot. Le tube ou queusot soudé sur le conteneur peut l'être également sur l'une des plaques en regard de l'orifice débouchant dans les interfaces. Pour réaliser le dégazage, ce queusot est raccordé à une pompe à vide, le pompage est effectué à une température donnée, comprise entre la température ambiante et 400°C environ, puis le queusot est obturé par soudage, sans remise à l'air.

Le cycle de CIC type comporte un chauffage et une pressurisation le plus souvent simultanés, un palier de température et de pression puis un refroidissement et une dépressurisation. Ce cycle est choisi notamment en fonction du (des) matériau(x) des plaques constitutives des éléments du premier circuit. En particulier, on peut choisir la température de palier et les vitesses de chauffage et de pressurisation (respectivement de refroidissement et dépressurisation) notamment en tenant compte des capacités de l'enceinte de CIC utilisée.

Le cycle de CIC selon l'étape c/ est de préférence réalisé à une pression comprise entre 20 et 500 bar, de préférence compris entre 40 et 200 bar. Le choix de la pression résulte d'un compromis entre qualité de soudage à obtenir et déformation acceptable des canaux. On désigne ici ce cycle CIC à relativement basse pression, car les pressions sont plus basses que celles d'un cycle CIC désigné à haute pression, i.e entre 500 et 2000 bar, avantageusement entre 800 et 1200 bar.

Le cycle de CIC selon l'étape c/ est de préférence encore réalisé à une température comprise entre 500 et 1200°C. La température que l'on retient dépend du matériau constitutif des plaques utilisées et de la taille de grain maximale admissible.

Selon un autre mode de réalisation avantageux, l'étape c/ est réalisée par compression uniaxiale. Ainsi, selon cet autre mode, on dispose chaque empilement réalisé selon l'étape b/ dans un four puis on le chauffe selon un cycle dépendant du matériau comme pour l'autre mode par CIC, et on applique une force soit dès le début du chauffage, soit en cours de chauffage, soit encore en cours de palier. L'empilement est ensuite refroidi. Comme pour le mode par CIC, le choix de la force résulte d'un compromis entre qualité de soudage à obtenir et déformation acceptable des canaux.

Selon cet autre mode, l'étape c/ est de préférence réalisée avec un effort de compression compris entre 1 et 500 kg/cm², de préférence encore compris entre 10 et 250 kg/cm².

Quel que soit le mode, l'étape c/ est de préférence réalisée pendant une durée comprise entre 15 min et quelques heures, de préférence entre 30 min et 2h. La durée d'un palier de CIC peut aller de 15 minutes à plusieurs heures, de préférence de 30minutes à 2h. Les temps de chauffage et pressurisation (respectivement de refroidissement et dépressurisation) dépendent des caractéristiques et possibilités de l'équipement (enceinte) utilisé, ils sont habituellement de plusieurs heures.

Après l'étape c/, on peut réaliser une étape c1/ non couverte par l'invention de réduction d'épaisseur, de préférence par usinage, d'au moins une plaque métallique assemblée. Ainsi, comme mentionné précédemment, il est possible de réduire la déformation des canaux du premier circuit de fluide en déterminant une épaisseur suffisamment grande pour les parois séparant des canaux de l'extérieur. Cette épaisseur est ensuite réduite selon cette étape c1/. Avec des épaisseurs de plaques initialement plus importantes, on peut avantageusement augmenter l'effort de soudage et/ou la température de soudage et donc la qualité des joints et par là trouver le meilleur compromis entre performances des joints, grossissement de grains et déformation des canaux.

Après l'étape c/, on réalise une étape c2/ d'ouverture des canaux du premier circuit vers l'extérieur. L'ouverture des canaux du premier circuit, comme celle ultérieure des canaux du deuxième circuit, peut être réalisée par perçage ou en coupant l'extrémité des plaques qui les obturent.

Selon une variante avantageuse, après l'étape c2/ d'ouverture, on réalise une étape c3/ d'application d'un cycle de compression isostatique à chaud (CIC) à haute pression à chaque empilement déjà assemblé. Cette variante est avantageuse car d'une part, faire un cycle CIC à haute pression permet de consolider les éléments du premier circuit de fluide, ce qui peut s'avérer utile car la pression lors de l'étape ultérieure d2/ peut avoir tendance à déformer lesdits éléments. D'autre part, un contrôle de préférence par ultrasons, après un cycle CIC haute pression selon l'étape c3/, permet de vérifier la conformité de l'assemblage.

Le cycle de CIC selon l'étape c3/ est de préférence réalisé à une pression comprise entre 500 et 2000 bar, de préférence entre 800 et 1200 bar. Ce cycle selon l'étape c3/ est destiné à parfaire l'assemblage pour chaque élément du premier circuit de fluide.

Après l'étape c/, ou le cas échéant avant et/ou après l'étape c3/, on réalise une étape c4/ de contrôle non destructif, de préférence par ultrasons, des canaux du premier circuit. Ce contrôle non destructif est réalisé par visualisation des faces opposées à celles comportant les rainures. De préférence, ce contrôle est réalisé avant et après le cycle CIC à haute pression (étape c3/): il permet de mettre en évidence la présence éventuelle de défauts à l'issue du cycle CIC à basse pression (étape c/) et leur élimination lors du cycle CIC à haute pression. La non élimination de ces défauts peut être une cause de rejet d'un élément du premier circuit. Le procédé selon l'invention permet ainsi un contrôle non destructif qui peut être systématique et qui ne peut être pratiqué sur des empilements de tôles ou plaques rainurées soudés par diffusion selon l'état de l'art.

Plusieurs modes et variantes de réalisation sont possibles pour la formation des canaux du deuxième circuit de fluide selon l'étape d/ non couvertes par l'invention - soit, les deuxièmes rainures peuvent être réalisées par rainurage d'au moins une face principale ou des deux faces principales de chaque élément du premier circuit opposée(s) à celles formant les canaux du premier circuit. - soit les deuxième rainures peuvent être réalisées par rainurage de faces principales de plaques métalliques distinctes des éléments du premier circuit.

L'étape e/ est de préférence réalisée par application d'un cycle de compression isostatique à chaud (CIC) à haute pression entre le ou les éléments du premier circuit et le ou les éléments du deuxième circuit, les canaux à la fois du premier circuit et du deuxième circuit étant ouverts vers l'extérieur. Le cycle de CIC selon l'étape e/ est avantageusement réalisé à une pression comprise entre 500 et 2000 bar, de préférence entre 800 et 1200 bar. La transmission de l'effort de soudage aux éléments du deuxième circuit empilés sur ceux du premier est effectuée par la pression de gaz non seulement sur ses faces extérieures mais aussi par l'intérieur des canaux du premier circuit de fluide. Ainsi, l'effort de soudage est particulièrement bien réparti et le soudage des éléments du deuxième circuit ou des autres circuits supplémentaires est grandement facilité.

Entre l'étape d/ et e/, les canaux du premier circuit étant ouverts vers l'extérieur et ceux du deuxième circuit formés, on réalise l'étape d2/ par application d'un cycle de compression isostatique à chaud (CIC) à relativement basse pression entre le ou les éléments du premier circuit et le ou les éléments du deuxième circuit. Cette étape d2/ est réalisée si le deuxième circuit de fluides est formé autrement qu'avec des tubes, i.e. par rainurage. L'application de cycle CIC avec les canaux du premier circuit ouverts permet d'avoir une bonne transmission de l'effort de soudage aux interfaces du deuxième circuit de fluide.

Avantageusement, on peut prévoir une étape f/ non couverte par l'invention de soudage de collecteurs de fluide sur le module assemblé selon l'étape e/, un collecteur de fluide étant apte à distribuer ou récupérer un fluide circulant dans le premier ou le deuxième circuit.

L'invention a également pour objet un module d'échangeur de chaleur à au moins deux circuits de fluide obtenu selon le procédé tel que décrit précédemment.

L'invention a enfin pour objet un système d'échangeur de chaleur comprenant une pluralité de modules comme ci-dessus, reliés entre eux.

L'invention concerne enfin l'utilisation d'un module d'échangeur comme ci-dessus ou du système ci-dessus en tant que partie d'échangeur de chaleur d'un réacteur nucléaire, tel qu'un réacteur refroidi au métal liquide (SFR).

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue de face d'une plaque métallique d'un élément d'un premier circuit de fluides C1 à partir duquel un premier exemple du procédé de réalisation d'un module d'échangeur de chaleur à deux circuits de fluide selon l'invention est mis en œuvre;
- la figure 1A est une vue en coupe selon A-A de la plaque selon la figure 1;
- la figure 1B est une vue de détail selon B de la plaque selon la figure 1;
- la figure 2 est une vue en perspective et en coupe transversale d'un élément du premier circuit de fluide réalisé à partir de deux plaques métalliques selon la figure 1 ;
- la figure 2A est une vue en coupe transversale de l'élément du premier circuit de fluides selon la figure 2 ;
- la figure 3 est une vue en perspective d'un élément du premier circuit de fluides selon la figure 2 ayant été rainuré sur ses faces principales en vue de former les canaux du deuxième circuit de fluide C2 du module d'échangeur de chaleur selon l'invention ;
- la figure 3A est une vue en perspective et en coupe transversale d'un élément de la figure 3 montrant à la fois les canaux du premier circuit de fluides C1 et les rainures pour former les canaux du deuxième circuit de fluides C2;
- la figure 4 est une vue en perspective d'un empilement de onze éléments selon la figure 3 et deux plaques additionnelles de part et d'autre de ces onze éléments en vue de former le module d'échangeur selon l'invention ;
- la figure 4A est une vue en perspective et en coupe transversale de l'empilement selon la figure 4 avant qu'il ne subisse un cycle CIC conformément à l'invention ;
- la figure 5 est une vue en perspective de l'empilement de la figure 4 après qu'il ait subi un cycle CIC basse pression et un cycle CIC haute pression conformes à l'invention et après découpe de ses bords latéraux pour ouvrir les canaux du deuxième circuit de fluides C2 ;
- la figure 6 est une vue en coupe transversale d'un autre exemple de réalisation d'un élément du deuxième circuit de fluides, distinct de la réalisation selon les figures précédentes.

Les termes « longitudinal » et « latéral » sont à considérer en relation avec la forme géométrique des plaques métalliques qui déterminent la forme géométrique des empilements du module d'échangeur thermique selon l'invention. Ainsi, au final les quatre côtés longitudinaux de l'empilement du module d'échangeur selon l'invention sont ceux qui s'étendent parallèlement à l'axe X longitudinal des plaques, c'est-à-dire selon leur longueur L. Les deux côtés latéraux de l'empilement sont ceux qui s'étendent selon l'axe Y latéral des plaques, orthogonalement à l'axe X, c'est-à-dire selon leur largeur l ou l'.

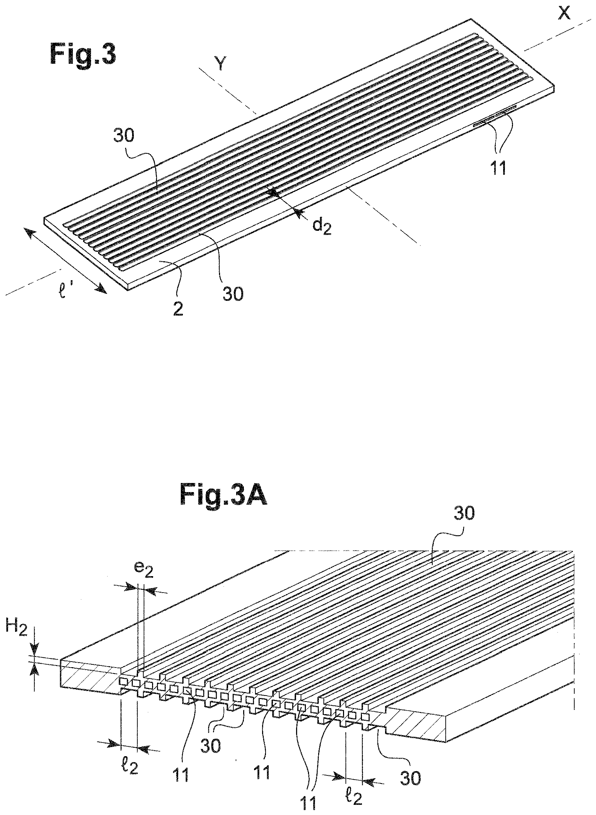

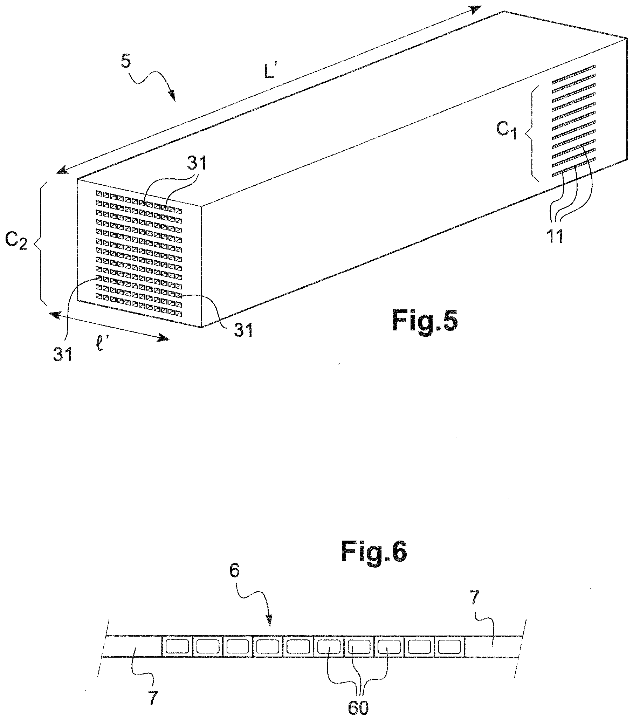

On précise que sur les figures 3, 3A, 4, 4A et 5A, on n'a pas représenté d'interface entre les plaques constituant les éléments du circuit 1 car à ce stade elles sont soudées. De même, sur la figure 5 on n'a pas représenté les interfaces du circuit 2.

### Exemple 1

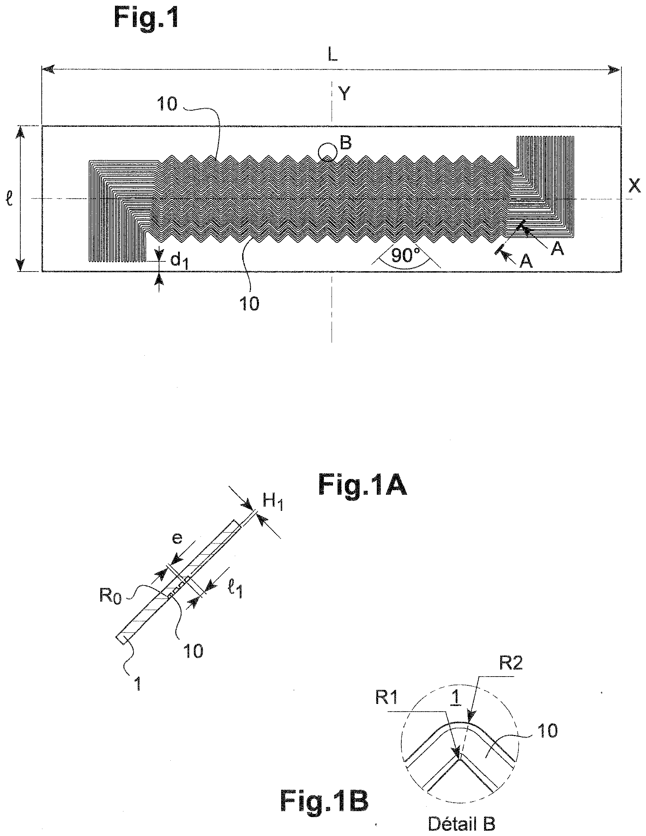

Etape a/ : Afin de réaliser un élément 2 d'un premier circuit C1 de fluides, on usine dans deux plaques métalliques 1 de formes rectangulaires L*l et d'épaisseur H, identiques entre elles, des rainures 10 de profondeur H1, de largeur l1 et d'écartement donné e (figures 1, 1A, 1B). Les usinages des rainures des deux plaques 1 sont réalisés selon deux motifs en image miroir l'un de l'autre: comme illustré sur la figure 1, il peut s'agir avantageusement de motifs en zig-zag avec des coudes à 90° et des inclinaisons de 45° par rapport à l'axe X longitudinal de plaques 1.

A titre d'exemple, les plaques 1 sont en acier inoxydable 1.4404, les dimensions L*1*H d'une plaque 1 sont égales à 602*150*4 mm, les dimensions H1*l1 des rainures sont égales à 1*2mm avec des tolérances respectivement égales à ± 0,02 mm et ±0,05mm, les rayons de courbure des rainures R0, R1, R2 sont respectivement égaux à 0,3mm, 0,1mm et 2,1mm, la distance e entre deux rainures consécutives, soit la largeur d'un isthme, est égale à 1 mm avec une tolérance égale à ±0,05mm. La distance d1 entre l'extrémité des rainures 10 et un bord longitudinal d'une plaque 10 est égale à 11 mm.

Etape a1/ : on réalise un nettoyage à l'aide de solvants et détergents des plaques 1.

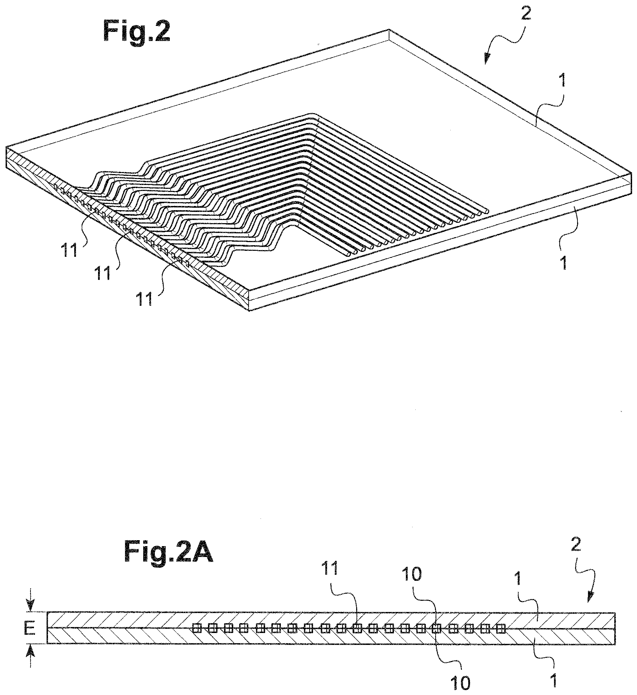

Etape b/ : Après les avoir nettoyées, on empile les deux plaques 1 de façon à reconstituer un élément 2 du premier circuit C1 comportant une série de canaux 11 en zig-zag de hauteur égale à 2*H1, soit 2 mm dans l'exemple (figures 2 et 2A). Les deux plaques 1 sont alignées l'une par rapport à l'autre grâce à des pions de centrage non représentés.

Etape b1/ : on rend étanche par soudage la périphérie de chaque élément 2 constitué par les deux plaques métalliques 1 empilées l'une sur l'autre en formant les canaux.

Etape b2/ : on dégaze l'interface entre les deux plaques de chaque empilement étanche à travers un orifice débouchant.

Etape b3/ : on ferme l'orifice débouchant.

Etape c/ : on soumet un lot de onze empilements 2 identiques à un cycle de CIC dit à basse pression, comprenant un chauffage en 2h à 1020°C sous 100bar, un palier d'une heure à 1020°C sous 100 bar puis un refroidissement en plusieurs heures et enfin une dépressurisation.

Etape c2/ : Les côtés longitudinaux des onze éléments 2 du premier circuit sont ensuite usinés pour ouvrir vers l'extérieur les extrémités des canaux 11 formés par les rainures 10. L'ouverture des canaux 11 est réalisée par découpe des extrémités de l'élément 2 qui les obturent, c'est-à-dire par découpe d'une bande longitudinale de largeur sensiblement égale à la distance dl, sur toute la longueur L de chaque élément 2. La largeur l' de chaque élément 2 est ainsi égale à l - 2*d1, soit 128 mm dans l'exemple précité.

On obtient ainsi onze éléments 2 du premier circuit de fluide que l'on peut aisément contrôler individuellement par ultrasons ou par radiographie.

Etape c3/: après l'étape c2/ d'ouverture, on réalise l'application d'un cycle de compression isostatique à chaud (CIC), dit à haute pression, à chacun des empilements 2 déjà assemblés. Ce cycle CIC haute pression comprend un chauffage en 3h à 1080°C sous 1000 bar pendant 3h.

On obtient ainsi onze éléments 2 du premier circuit de fluide C1 que l'on peut aisément contrôler individuellement par ultrasons ou par radiographie.

On effectue de préférence un nouveau contrôle de chacun des onze éléments 2 par ultrasons.

Etape d/:
Etape d1/ : Les deux faces principales de chacun de ces onze éléments 2 obtenus du premier circuit et une seule face principale de deux plaques additionnelles 4 sont ensuite rainurées pour y reconstituer les canaux d'un deuxième circuit de fluide C2. Les deuxièmes rainures 30 ne débouchent pas à l'extérieur (figure 3). A titre d'exemple, chaque rainure 30 a une largeur l2 égale à 5,75mm, une profondeur (hauteur) H2 égale à 1,75mm, et est séparée d'une rainure 30 consécutive par un isthme (nervure) de largeur e2 égale à 1,75 mm. La distance d2 entre l'extrémité des rainures 30 et un bord latéral d'un élément 2 est égale à 11 mm.

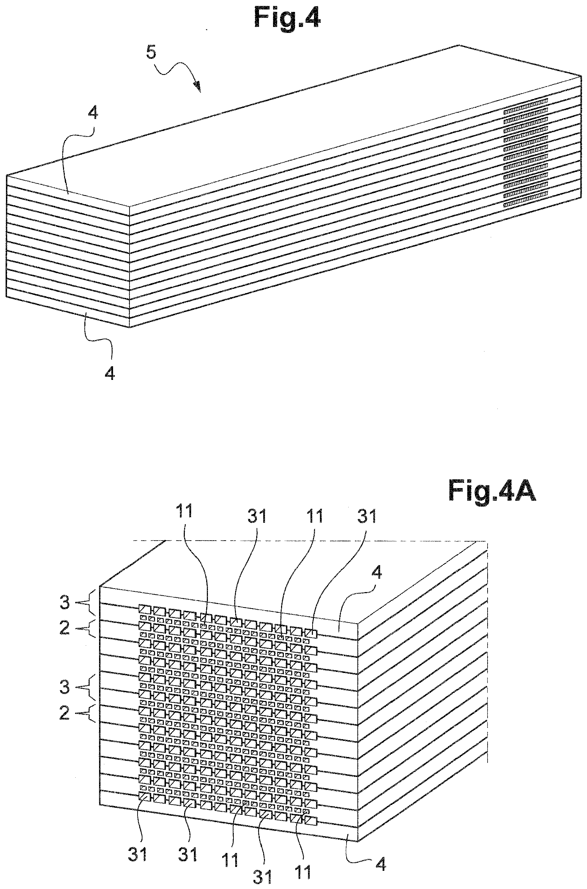

Après avoir nettoyé tous les éléments, on les empile de façon à obtenir une superposition de onze éléments 2 du premier circuit de fluide C1 et de douze éléments 3 du deuxième circuit de fluide C2 dont les canaux 31 sont formés par les deuxièmes rainures 30 (figure 4). Les éléments sont alignés grâce à des pions de centrage insérés dans des trous borgnes.

Ensuite, on rend étanche la périphérie de l'empilement complet 5 et on dégaze chaque interface par un orifice débouchant que l'on obstrue. Pour réaliser l'étanchéité à la périphérie de l'empilement, on peut soit agencer l'empilement complet 5 dans un conteneur en laissant des ouvertures en regard des canaux 11 du premier circuit C1, soit souder la périphérie de toutes les plaques 1 constituant l'empilement 5.

Etape d2/ : On soumet l'empilement complet à un cycle de CIC basse pression comprenant un chauffage en 2h à 1020°C sous 100bar, un palier de trois heures à 1020°C sous 100bar, puis un refroidissement en plusieurs heures et une dépressurisation.

Durant ce deuxième cycle CIC, les canaux 11 du premier circuit de fluide sont remplis par le gaz pressurisé de l'enceinte mettant en œuvre le cycle CIC, ce qui permet une bonne transmission de l'effort de soudage aux interfaces des plaques 1 formant les canaux 31 du deuxième circuit de fluide C2.

On réalise alors l'ouverture des canaux 31 du deuxième circuit de fluide C2 par usinage des côtés latéraux du module constitué par l'empilement complet 5.. L'ouverture des canaux 31 est réalisée par découpe des extrémités de l'empilement 5 qui les obturent, c'est-à-dire par découpe d'une bande latérale de part et d'autre de l'empilement sur toute la largeur l', la bande étant de largeur sensiblement égale à la distance d2. La longueur L' de l'empilement 5 est ainsi égale à L - 2*d2, soit 580 mm dans l'exemple précité.

Les canaux 31 du deuxième circuit C2 sont ainsi ouverts sur chacun des bords latéraux de l'empilement 5 tandis que les canaux 11 du premier circuit C1 sont ouverts sur chacun des bords longitudinaux de l'empilement 5 (figure 5).

Etape e/ : A l'issue de l'usinage, c'est-à-dire une fois les canaux 31 du deuxième circuit de fluide ouverts vers l'extérieur de l'empilement, on applique au module ainsi obtenu un cycle de CIC à 1080°C sous 1000bar pendant 3h pour éliminer les défauts résiduels dans les joints soudés.

Etape f : Enfin, on rapporte par soudage des collecteurs de distribution de fluide non représentés, de sorte à alimenter et/ou récupérer un fluide dans chacun des premier C1 et deuxième C2 circuits au niveau des extrémités des rainures formant les canaux 11, 31.

Grâce au procédé selon les étapes a/ à f/, on obtient un module d'échangeur de chaleur qui est compact et assemblé par soudage-diffusion en CIC.

Un tel module d'échangeur de chaleur selon l'exemple 1/ peut être considéré comme étant à canaux de circulation de fluide de faibles dimensions et avec des géométries complexes (en zig-zag).

A titre d'exemple, un module d'échangeur selon l'exemple 1/ peut être un parallélépipède rectangle à deux faces carrées. Les dimensions d'un tel module peuvent être égales à 580x128x104 mm.

### Exemple 2

On réalise les mêmes étapes que pour l'exemple 1 à la différence près qu'en outre, on usine les faces principales des onze éléments 2 du premier circuit C1 jusqu'à ce que l'épaisseur de paroi entre le fond des rainures 10 et l'extérieur soit égale à la moitié de l'épaisseur désirée entre chacun des deux circuits C1, C2.

On réalise un empilement 5 en intercalant entre les onze éléments 2 du premier circuit fluide C1, les douze éléments 30, 4 du deuxième circuit de fluide réalisés et usinés selon le même principe.

Puis, on soude la périphérie des interfaces planes ainsi obtenues, on les dégaze et on applique un cycle de CIC haute pression à 1080°C sous 1000bar pendant 3h.

### Exemple 3

On réalise les mêmes étapes que pour l'exemple 1 à la différence près qu'en outre, on usine les faces principales des onze éléments 2 du premier circuit C1 jusqu'à ce que l'épaisseur de paroi entre le fond des rainures 10 et l'extérieur soit égale la moitié de l'épaisseur désirée entre chacun des deux circuits.

Les éléments du deuxième circuit de fluide C2 sont ici au nombre de dix et sont chacun constitués d'une nappe 6 elle-même constituée de tubes 60 carrés, rectifiés, disposés parallèlement les uns aux autres et de deux barrettes 7, de même épaisseur que les tubes, ajoutées parallèlement aux tubes de chaque côté de la nappe 6 (figure 6). Les dimensions externes d'une nappe 6, i.e. la largeur et la longueur, sont égales à celles d'une plaque rainurée 1 constitutive d'un élément 2 du premier circuit C1.

On réalise alors un empilement en intercalant entre deux éléments 2 du premier circuit C1 consécutifs une nappe 6 de tubes carrés 60, rectifiés jointifs les uns aux autres.

On soude la périphérie des interfaces ainsi obtenues, on les dégaze puis on applique un cycle de CIC à 1080°C, 1000bar pendant 3h.

Bien entendu, la présente invention n'est pas limitée aux variantes et aux modes de réalisation décrits fournis à titre d'exemples illustratifs et non limitatifs.

Les canaux peuvent également présenter une géométrie autre qu'un motif en zig-zag comme montré en figure 1 tout étant de forme allongée.

La taille des canaux pour chacun des circuits de fluide peut être différente selon la nature et les propriétés des fluides à véhiculer, les pertes de charges admissibles et le débit souhaité. On peut empiler plusieurs éléments du même circuit dans le but d'optimiser une fonctionnalité de l'échangeur, par exemple l'échange thermique ou le débit d'un des fluides.

Si les exemples illustrés 1/ à 3/ concernent des échangeurs à exactement deux circuits de fluides, il est tout à fait possible de fabriquer un échangeur à trois circuits de fluides ou plus.

Les deux collecteurs de fluide peuvent être agencés de part et d'autre de l'empilement constituant le module, ou de manière alternative d'un même côté de l'empilement.

Les modules d'échangeurs de chaleur obtenus selon le procédé de l'invention peuvent être assemblés les uns aux autres, par exemple en utilisant des brides ou en soudant les tuyauteries d'amenée de fluides. On peut ainsi envisager de réaliser un système échangeur de chaleur à plusieurs modules reliés entre eux dans lequel les échanges se font en plusieurs étapes avec des températures moyennes différentes ou des écarts de température par module suffisamment réduits pour diminuer les contraintes thermiques dans les matériaux. Par exemple, dans le cas d'un échangeur de chaleur dans lequel on désire transférer la chaleur d'un premier fluide à un second, on peut concevoir un système d'échangeur modulaire dans lequel chaque module permet de diminuer la température du premier fluide d'une valeur donnée, limitant ainsi les contraintes par rapport au cas d'une conception à un seul module présentant un écart de température plus élevé. Pour cela, la température d'entrée du second fluide peut différer d'un module à l'autre. Dans un autre exemple, un système de réacteur-échangeur modulaire permet de mener une réaction chimique complexe par étages en contrôlant précisément la température de réaction à chaque étage, pour un contrôle optimal de la réaction chimique, une minimisation des risques et une maximisation des rendements.

Un système d'échangeurs de chaleur à plusieurs modules permet aussi de diminuer les coûts de maintenance, en permettant le remplacement individuel d'un module défaillant, voire les coûts de fabrication par standardisation des modules.

### REFERENCES CITEES

[1] «Fusion reactor first wall fabrication techniques» de G. Le Marois, E. Rigal, P. Bucci, (Fusion Engineering and Design pp 61-62 (2002) 103-110 Elsevier Science B.V);
[2] « *Assemblage par diffusion* » - Techniques de l'ingénieur [BM 7747].

## Revendications

1. Procédé de réalisation d'un module d'échangeur de chaleur à au moins deux circuits de fluide comportant chacun des canaux, comportant les étapes suivantes :
a/ réalisation d'un ou plusieurs éléments (2) d'un des deux circuits de fluide, dit premier circuit, chaque élément du premier circuit comportant au moins deux plaques métalliques (1) dont au moins une comporte des premières rainures (10);
b/ empilement des au moins deux plaques métalliques (1) de chaque élément de sorte que les premières rainures forment les canaux (11) du premier circuit;
c/ assemblage par soudage-diffusion entre les au moins deux plaques métalliques empilées de chaque élément du premier circuit;
d/ réalisation d'un ou plusieurs éléments (3, 30 ; 6, 60) d'au moins un autre circuit de fluide, dit deuxième circuit, chaque élément du deuxième circuit comportant au moins une partie des canaux (31, 60) du deuxième circuit; l'étape d/ étant réalisée, pour chaque élément du deuxième circuit, soit par une étape d1/ d'empilement d'au moins deux plaques métalliques dont au moins une comporte des deuxièmes rainures formant une partie des canaux du deuxième circuit, puis une étape d2/ d'assemblage par soudage-diffusion entre les au moins deux plaques métalliques empilées de chaque élément du deuxième circuit, soit par une étape d'1/ d'insertion de tubes agencés parallèlement entre eux formant une partie des canaux du deuxième circuit;
e/ assemblage soit par soudage-diffusion, soit par brasage, soit par brasage-diffusion entre le ou les éléments du premier circuit et le ou les éléments du deuxième circuit empilés.

2. Procédé selon la revendication 1, selon lequel avant l'étape b/, on réalise une étape a1/ de nettoyage des plaques de chaque élément du premier circuit.

3. Procédé selon la revendication 1 ou 2, selon lequel après l'étape b/, on réalise une étape d'étanchéification b1/ de la périphérie des au moins deux plaques métalliques de chaque élément, puis on réalise une étape b2/ de dégazage de l'intérieur de chaque empilement étanche à travers un orifice débouchant à chaque interface entre plaques, une étape b3/ de fermeture de l'orifice débouchant, et enfin on réalise l'étape c/ par application d'un cycle de compression isostatique à chaud (CIC) à relativement basse pression à chaque empilement étanche et dégazé,
le cycle de CIC selon l'étape c/ étant réalisé de préférence à une pression comprise entre 20 et 500 bar, de préférence compris entre 40 et 200 bar,, de préférence à une température comprise entre 500 et 1200°C.

4. Procédé selon la revendication 1 ou 2, l'étape c/ étant réalisée par compression uniaxiale, de préférence avec un effort de compression compris entre 1 et 500 kg/cm², de préférence compris entre 10 et 250 kg/cm².

5. Procédé selon l'une quelconque des revendications précédentes, l'étape c/ étant réalisée pendant une durée comprise entre 15 min et quelques heures de préférence entre 30 min et 2h.

6. Procédé selon l'une quelconque des revendications précédentes, selon lequel après l'étape c/, on réalise une étape c2/ d'ouverture des canaux du premier circuit vers l'extérieur.

7. Procédé selon la revendication 6, selon lequel après l'étape c2/, on réalise une étape c3/ d'application d'un cycle de compression isostatique à chaud (CIC) à haute pression à chaque empilement déjà assemblé.

8. Procédé selon la revendication 7, le cycle de CIC selon l'étape c3/ étant réalisé à une pression comprise entre 500 et 2000 bar, de préférence entre 800 et 1200 bar.

9. Procédé selon l'une quelconque des revendications précédentes, selon lequel après l'étape c/ / ou le cas échéant avant et/ou après l'étape c3/, on réalise une étape c4/ de contrôle non destructif, de préférence par ultrasons, des canaux du premier circuit.

10. Procédé selon l'une quelconque des revendications précédentes, selon lequel l'étape e/ est réalisée par application d'un cycle de compression isostatique à chaud (CIC) à haute pression entre le ou les éléments du premier circuit et le ou les éléments du deuxième circuit, les canaux à la fois du premier circuit et du deuxième circuit étant ouverts vers l'extérieur,
le cycle de CIC selon l'étape e/ étant de préférence réalisé à une pression comprise entre 500 et 2000 bar, de préférence entre 800 et 1200 bar.

11. Procédé selon l'une quelconque des revendications précédentes, selon lequel entre l'étape d/ et e/, les canaux du premier circuit étant ouverts vers l'extérieur et ceux du deuxième circuit formés, on réalise l'étape d2/ par application d'un cycle de compression isostatique à chaud (CIC) à relativement basse pression entre le ou les éléments du premier circuit et le ou les éléments du deuxième circuit.

12. Module d'échangeur de chaleur à au moins deux circuits de fluide obtenu selon le procédé selon l'une quelconque des revendications précédentes.

13. Système d'échangeur de chaleur comprenant une pluralité de modules selon la revendication 12 reliés entre eux.

14. Utilisation d'un module d'échangeur selon la revendication 12 ou du système selon la revendication 13 en tant que partie d'échangeur de chaleur d'un réacteur nucléaire, tel qu'un réacteur refroidi au métal liquide (SFR).

## Patentansprüche

1. Verfahren zur Herstellung eines Wärmetauschermoduls mit mindestens zwei Fluidkreisläufen, von denen jeder Kanäle umfasst, umfassend die folgenden Schritte:
a/ Herstellen eines oder mehrerer Elemente (2) eines der beiden Fluidkreisläufe, erster Kreislauf genannt, wobei jedes Element des ersten Kreislaufs mindestens zwei Metallplatten (1) umfasst, von denen mindestens eine erste Rillen (10) umfasst;
b/ Stapeln der mindestens zwei Metallplatten (1) jedes Elements derart, dass die ersten Rillen die Kanäle (11) des ersten Kreislaufs bilden;
c/ Fügen durch Diffusionsschweißen der mindestens zwei gestapelten Metallplatten jedes Elements des ersten Kreislaufs;
d/ Herstellen eines oder mehrerer Elemente (3, 30; 6, 60) mindestens eines weiteren Fluidkreislaufs, zweiter Kreislauf genannt, wobei jedes Element des zweiten Kreislaufs mindestens einen Teil der Kanäle (31, 60) des zweiten Kreislaufs umfasst; wobei der Schritt d/ bei jedem Element des zweiten Kreislaufs entweder durch einen Schritt d1/ des Stapelns von mindestens zwei Metallplatten, von denen mindestens eine zweite Rillen umfasst, die einen Teil der Kanäle des zweiten Kreislaufs bilden, dann einen Schritt d2/ des Fügens durch Diffusionsschweißen der mindestens zwei gestapelten Metallplatten jedes Elements des zweiten Kreislaufs ausgeführt wird oder durch einen Schritt d'1/ des Einführens von parallel zueinander angeordneten Rohren, die einen Teil der Kanäle des zweiten Kreislaufs bilden;
e/ Fügen entweder durch Diffusionsschweißen oder durch Löten oder durch Diffusionslöten des oder der Elemente des ersten Kreislaufs und des oder der gestapelten Elemente des zweiten Kreislaufs.

2. Verfahren nach Anspruch 1, bei dem vor dem Schritt b/ ein Schritt a1/ des Reinigens der Platten jedes Elements des ersten Kreislaufs ausgeführt wird.

3. Verfahren nach Anspruch 1 oder 2, bei dem nach dem Schritt b/ ein Schritt des Abdichtens b1/ des Umfangs der mindestens zwei Metallplatten jedes Elements ausgeführt wird, dann ein Schritt b2/ des Entgasens des Innenraums jedes dichten Stapels durch eine an jeder Grenzfläche zwischen Platten mündende Öffnung hindurch ausgeführt wird, ein Schritt b3/ des Verschließens der mündenden Öffnung und schließlich der Schritt c/ durch Anwenden eines Zyklus des heißisostatischen Pressens (HIP) bei relativ geringem Druck auf jeden dichten und entgasten Stapel ausgeführt wird,
wobei der HIP-Zyklus gemäß dem Schritt c/ bevorzugt bei einem Druck zwischen 20 und 500 bar, bevorzugt zwischen 40 und 200 bar, bevorzugt bei einer Temperatur zwischen 500 und 1200 °C ausgeführt wird.

4. Verfahren nach Anspruch 1 oder 2, wobei der Schritt c/ durch uniaxiales Pressen ausgeführt wird, bevorzugt mit einer Presskraft zwischen 1 und 500 kg/cm², bevorzugt zwischen 10 und 250 kg/cm².

5. Verfahren nach einem der vorhergehenden Ansprüche, wobei der Schritt c/ während einer Zeitdauer zwischen 15 min und einigen Stunden, bevorzugt zwischen 30 min und 2 h ausgeführt wird.

6. Verfahren nach einem der vorhergehenden Ansprüche, bei dem nach dem Schritt c/ ein Schritt c2/ des Öffnens der Kanäle des ersten Kreislaufs nach außen ausgeführt wird.

7. Verfahren nach Anspruch 6, bei dem nach dem Schritt c2/ ein Schritt c3/ des Anwendens eines Zyklus des heißisostatischen Pressens (HIP) bei hohem Druck auf jeden bereits gefügten Stapel ausgeführt wird.

8. Verfahren nach Anspruch 7, wobei der HIP-Zyklus gemäß Schritt c3/ bei einem Druck zwischen 500 und 2000 bar, bevorzugt zwischen 800 und 1200 bar ausgeführt wird.

9. Verfahren nach einem der vorhergehenden Ansprüche, bei dem nach dem Schritt c/ / oder gegebenenfalls vor und/oder nach dem Schritt c3/ ein Schritt c4/ der zerstörungsfreien Prüfung, bevorzugt durch Ultraschall, der Kanäle des ersten Kreislaufs ausgeführt wird.

10. Verfahren nach einem der vorhergehenden Ansprüche, bei dem der Schritt e/ durch Anwenden eines Zyklus des heißisostatischen Pressens (HIP) bei hohem Druck zwischen dem oder den Elementen des ersten Kreislaufs und dem oder den Elementen des zweiten Kreislaufs ausgeführt wird, wobei die Kanäle sowohl des ersten Kreislaufs als auch des zweiten Kreislaufs nach außen offen sind,
wobei der HIP-Zyklus gemäß dem Schritt e/ bevorzugt bei einem Druck zwischen 500 und 2000 bar, bevorzugt zwischen 800 und 1200 bar ausgeführt wird.

11. Verfahren nach einem der vorhergehenden Ansprüche, bei dem zwischen dem Schritt d/ und e/, wenn die Kanäle des ersten Kreislaufs nach außen offen sind und die des zweiten Kreislaufs gebildet sind, der Schritt d2/ durch Anwenden eines Zyklus des heißisostatischen Pressens (HIP) bei relativ geringem Druck zwischen dem oder den Elementen des ersten Kreislaus und dem oder den Elementen des zweiten Kreislaufs ausgeführt wird.

12. Wärmetauschermodul mit mindestens zwei Fluidkreisläufen, das nach dem Verfahren nach einem der vorhergehenden Ansprüche erhalten wird.

13. Wärmetauschersystem, das eine Vielzahl von untereinander verbundenen Modulen nach Anspruch 12 umfasst.

14. Verwenden eines Wärmetauschermoduls nach Anspruch 12 oder des Systems nach Anspruch 13 als Teil eines Wärmetauschers eines Kernreaktors wie eines flüssigmetallgekühlten Reaktors (SFR).

## Claims

1. A method for producing a heat exchanger module having at least two fluid circuits which each comprise channels, comprising the following steps:
a/ producing one or more elements (2) of one of the two fluid circuits, referred to as the first circuit, each element of the first circuit comprising at least two metal plates (1), at least one of which comprises first grooves (10);
b/ stacking the at least two metal plates (1) of each element so that the first grooves form the channels (11) of the first circuit;
c/ assembling by means of diffusion welding between the at least two stacked metal plates of each element of the first circuit;
d/ producing one or more elements (3, 30; 6, 60) of at least one other fluid circuit, referred to as the second circuit, each element of the second circuit comprising at least a portion of the channels (31, 60) of the second circuit; step d/ being carried out, for each element of the second circuit, either via a step d1/ of stacking at least two metal plates, at least one of which comprises second grooves which form a portion of the channels of the second circuit, then a step d2/ of assembly by means of diffusion welding between the at least two stacked metal plates of each element of the second circuit, or via a step d'l/ of inserting tubes which are arranged parallel with each other and which form a portion of the channels of the second circuit.
e/ assembling by means of diffusion welding or by means of soldering, or by means of diffusion soldering, between the element(s) of the first circuit and the element(s) of the second circuit.

2. The method as claimed in claim 1, according to which before step b/, a step a1/ of cleaning the plates of each element of the first circuit is carried out.

3. The method as claimed in claim 1 or 2, according to which after step b/, a step b1/ of sealing the periphery of the at least two metal plates of each element is carried out, then a step b2/ of degasification of the inner side of each sealed stack is carried out through an opening hole at each interface between plates, a step b3/ of closing the opening hole is carried out, and finally step c/ is carried out by application of a hot isostatic pressing cycle (HIP) at relatively low pressure to each stack which is sealed and degasified, the HIP cycle according to step c/ being preferably carried out at a pressure of between 20 and 500 bar, preferably between 40 and 200 bar, preferably at a temperature of between 500 and 1200°C.

4. The method as claimed in claim 1 or 2, step c/ being carried out by means of uniaxial compression, preferably with a compression force of between 1 and 500 kg/cm², preferably between 10 and 250 kg/cm².

5. The method as claimed in anyone of the preceding claims, step c/ being carried out for a duration of between 15 minutes and a few hours, preferably between 30 minutes and 2 hours.

6. The method as claimed in anyone of the preceding claims, according to which, after step c/, a step c2/ of opening the channels of the first circuit toward the outer side is carried out.

7. The method as claimed in claim 7, according to which, after step c2/, a step c3/ of application of a hot isostatic pressing cycle (HIP) at high pressure to each stack which has already been assembled is carried out.

8. The method as claimed in claim 7, the HIP cycle according to step c3/ being carried out at a pressure of between 500 and 2000 bar, preferably between 800 and 1200 bar.

9. The method as claimed in anyone of the preceding claims, according to which, after step c/ or where applicable before and/or after step c3/, a step c4/ of nondestructive control of the channels of the first circuit is carried out, preferably by means of ultrasound.

10. The method as claimed in anyone of the preceding claims, according to which step e/ is carried out by means of application of a hot isostatic pressing (HIP) cycle at high pressure between the element(s) of the first circuit and the element(s) of the second circuit, the channels of both the first circuit and the second circuit being open toward the outer side, the HIP cycle according to the step e/ being preferably carried out at a pressure of between 500 and 2000 bar, preferably between 800 and 1200 bar.

11. The method as claimed in anyone of the preceding claims, according to which, between step d/ and e/, the channels of the first circuit being open toward the outer side and those of the second circuit formed, step d2/ is carried out by application of a hot isostatic pressing cycle (HIP) at relatively low pressure between the element(s) of the first circuit and the element(s) of the second circuit.

12. A heat exchange module having at least two fluid circuits obtained in accordance with the method as claimed in one of the preceding claims.

13. A heat exchanger system comprising a plurality of modules as claimed in claim 12, which are connected to each other.

14. A use of an exchanger module as claimed in claim 12 or the system as claimed in claim 13 as part of a heat exchanger of a nuclear reactor such as a liquid metal cooled reactor (LMFR).
